# EUROPEAN PATENT APPLICATION

(11) **EP 2 312 833 A1**
(43) Date of publication of application: **20.04.2011**
(21) Application number: 09804501.6
(22) Date of filing: 06.08.2009
(51) Int. Cl.: H04N 5/44

(54) **METHOD AND APPARATUS FOR SELECTING VIDEO CHANNEL, VIDEO DEVICE AND TV DEVICE**

(30) Priority: 07.08.2008 CN 200810135284
(71) Applicant: Haier Group Corporation, Qingdao Shandong 266101 (CN); Qingdao Haier Electronics Co., Ltd., Shandong 266101 (CN)
(72) Inventor: YU, Zida, Qingdao Shandong 266101 (CN); ZHAI, Yili, Qingdao Shandong 266101 (CN); HU, Xijia, Qingdao Shandong 266101 (CN); CHEN, Ying, Qingdao Shandong 266101 (CN)
(74) Representative: Meissner, Bolte & Partner
(86) International application number: PCT/CN2009/073110
(87) International publication number: WO 2010/015201

(57) **Abstract**

A method and apparatus for selecting video channel, a video device and a TV device are provided according to the embodiments of the present invention, wherein the state signal is obtained in said method for selecting video channel, wherein, the state signal is used for representing a video interface type of a accessed video deivce ; and the video channel is selected according to the video interface type. The video channel selection and the upgrade of product of video devices such as DVD are realized through the solutions above.

## Description

The present application claims the priority from Chinese Patent Application No. 200810135284.X filed on August 7, 2008 in the State Intellectual Property Office of China, and titled "METHOD AND APPARATUS FOR SELECTING VIDEO CHANNEL, VIDEO DEVICE AND TV DEVICE", the disclosure of which is incorporated herein by reference in its entirety.

### TECHNICAL FIELD OF THE INVENTION

The present invention relates to the field of audio/video communication, and particularly to a method and apparatus for selecting a video channel, a video device and a TV device.

### BACKGROUND OF THE INVENTION

With the advancement of science and technology, the video appreciation levels of consumers increase continuously from a video tape to a VCD and then to a DVD, and the playback quality is enhanced continuously. Moreover, currently there has emerged a two-in-one TV device which integrates DVD functions with TV functions.

There exist a plurality of video playback modes of video products such as a DVD, and correspondingly, there exist a plurality of kinds of video interfaces, which specifically include a video interface, a super video interface, a YCbCr or YPbPr interface, an RGB interface and an HDMI interface, etc.

In the view of product design, since there are many kinds of video interfaces, it is difficult to implement a modular and standardized design. In the view of the utilization of a user, since there are many kinds of video interfaces, it undoubtedly increases the difficulty of the connection operation between a video device such as the DVD and a device having a DVD playback function such as a TV and a display, and it is particularly difficult for an ordinary user to find the correct connecting mode.

Further, the technology of DVD products and the like at the modern stage is upgraded rapidly, and in some cases, sold products need to be updated in hardware and/or software. The diversity of the video interfaces also increases the complexity of the upgrading process.

Therefore, when designing a TV product or another product having a display function for a DVD product and the like, it needs to consider how to cope with a problem that a video device such as a DVD has a plurality of kinds of video interfaces, and this problem is particularly noticeable for the current period during which the TV is being converted from an analog type to a digital type.

### SUMMARY OF THE INVENTION

The present invention is proposed in view of the above-mentioned problem. The present invention aims at providing a method and apparatus for selecting a video channel, a video device and a TV device for solving the problem existing in the prior art that a lot of inconveniences are brought about in design and utilization because there are many kinds of video interfaces for a video device.

According to an embodiment of the present invention, a method for selecting a video channel comprises the steps of: obtaining a state signal, wherein the state signal is used for representing a video interface type of an accessed video device; and, selecting a video channel according to the state signal.

Preferably, the method further comprises a step of: before obtaining the state signal, presetting a correspondence relation between the video interface type and the state signal. Preferably, the step of selecting a video channel according to the state signal specifically comprises the steps of: determining the video interface type corresponding to the obtained state signal based on the preset correspondence relation; and, according to the determined video interface type, selecting the video channel corresponding to the video interface type.

Preferably, the state signal is a signal set of three levels, and all the three levels are high level. The three levels can be used to represent there is no access of a video device.

According to an embodiment of the present invention, an apparatus for selecting a video channel comprises: an obtaining module for obtaining a state signal, wherein the state signal is used for representing a video interface type of an accessed video device; and, a selecting module for selecting a video channel according to the state signal obtained by the obtaining module.

Preferably, the apparatus further comprises: a setting module for presetting a correspondence relation between the video interface type and the state signal. Preferably, the obtaining module further comprises: a determining module for determining the video interface type represented by the received state signal based on the correspondence relation preset by the setting module; and, a controlling module for controlling the selecting module to select the video channel corresponding to the video interface type, based on the video interface type determined by the determining module.

According to an embodiment of the present invention, a video device comprises: a signal generating module for generating a state signal, wherein the state signal is used for representing a video interface type of the video device; and, an output interface for outputting the state signal.

Preferably, the video device further comprises: a setting module for presetting a correspondence relation between the video interface type and the state signal, wherein the signal generating module is used for generating the state signal corresponding to the video interface type of the video device based on the correspondence relation set by the setting module.

According to an embodiment of the present invention, a TV device comprises: an input interface for inputting a state signal from outside, wherein the state signal is used for representing a video interface type of a video device accessing the TV device; a main control CPU for receiving the state signal and controlling video channel selection based on the state signal; a selective switch for selecting a video channel under control of the main control CPU; and a format conversion driving and displaying circuit for accessing the video channel selected by the selective switch.

Preferably, the TV device further comprises: a setting module for presetting a correspondence relation between the video interface type and the state signal, wherein the main control CPU is used for determining the video interface type corresponding to the received state signal based on the correspondence relation set by the setting module, and controlling the selective switch to select a video channel corresponding to the video interface type.

According to an embodiment of the present invention, a TV device integrating a video function comprises a video apparatus and an TV apparatus, wherein the video apparatus comprises: a signal generating module for generating a state signal, wherein the state signal is used for representing a video interface type of the video apparatus; and, an output interface for outputting the state signal, and the TV apparatus comprises: an input interface for inputting the state signal from the output interface; a main control CPU for receiving the state signal and controlling video channel selection based on the state signal; and a selective switch for selecting a video channel under control of the main control CPU.

Preferably, the TV device further comprises a setting module for presetting a correspondence relation between the video interface type and the state signal and notifying the video apparatus and the TV apparatus of the set correspondence relation. Preferably, the signal generating module is used for generating the state signal corresponding to the video interface type of the video apparatus based on the correspondence relation set by the setting module; and the main control CPU is used for determining the video interface type corresponding to the received state signal based on the correspondence relation set by the setting module, and controlling the selective switch to select a video channel corresponding to the video interface type.

Preferably, the TV apparatus in the TV device further comprises a format conversion driving and displaying circuit for accessing the video channel selected by the selective switch.

Preferably, the state signal is a signal set of three levels.

With the above-mentioned technical solution of the present invention, the video channel can be selected according to the video interface type, and compared to the current situation in the related art that a lot of inconveniences are brought to the connection between a video playback apparatus such as a DVD and etc. and a TV because there are many kinds of video interfaces, the connection can be implemented conveniently and user experiences are enhanced.

Additional features and advantages of the present invention will be set forth in the description which follows, and in part will be apparent from the description, or may be learned by practice of the invention. The objectives and other advantages of the present invention will be realized and attained by the structure particularly pointed out in the written description and claims thereof as well as the appended drawings.

### BRIEF DESCRIPTION OF THE DRAWINGS

The accompanying drawings, which are included to provide a further understanding of the present invention and constitute a part of this specification, serve to explain the principles of the invention together with the description, and do not constitute a limitation to the present invention. In the drawings:
Fig. 1 is a flowchart showing a method for selecting a video channel according to an embodiment of the present invention;
Fig. 2 is a structural block diagram showing an apparatus for selecting a video channel according to an embodiment of the present invention;
Fig. 3 is a structural block diagram showing a video device according to an embodiment of the present invention;
Fig. 4 is a structural block diagram showing a TV device according to an embodiment of the present invention;
Fig. 5 is a structural block diagram showing a TV device having a video function according to an embodiment of the present invention;
Fig. 6 is a structural schematic diagram showing a TV device having a video function according to an embodiment of the present invention; and
Fig. 7 is a schematic diagram of a logical structure according to an application example of the present invention.

### DETAILED DESCRIPTION OF EMBODIMENTS OF THE INVENTION

The preferred embodiments of the present invention will be described below in conjunction with the drawings. It is understood that the preferred embodiments described herein are only used for illustrating and explaining the present invention, instead of limiting the present invention.

With respect to the problem existing in the prior art that a lot of inconveniences are brought to product design and user utilization because there are many kinds of video interfaces for a video device, the present invention provides such an idea that an interface specification is determined between a TV and a DVD, in order that various video interfaces (such as the 5 kinds of interfaces mentioned above) have respective interface definitions on a TV, thereby selecting a video channel and performing the subsequent processing conveniently. In the following description, a DVD and a TV as well as an integrated DVD/TV are taken as examples. Obviously, the present invention is also applicable to other audio/video devices such as a VCD, and other devices having audio/video device playback functions in addition to a TV.

According to an embodiment of the present invention, a method for selecting a video channel is provided first.

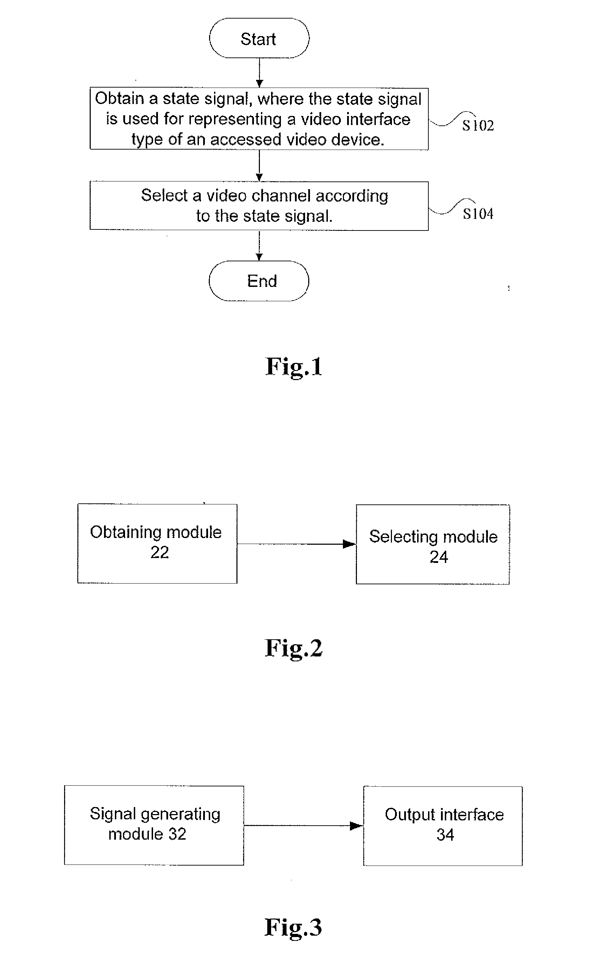

Fig. 1 shows a general processing process of the method for selecting a video channel. As shown in Fig. 1, the method includes the following processing:
Step S102: obtaining a state signal, wherein the state signal is used for representing the type of the video interface of an accessed video device; and,
Step S104: selecting a video channel according to the state signal.

Preferably, before performing the above processing, it is necessary to preset a correspondence relation between the type of the video interface and the state signal. The correspondence relation can be prescribed through a protocol and can also be set respectively with respect to different kinds of products. The state signal mentioned herein can be a signal set of levels. Different signal sets of levels can be used with respect to the difference in the number of the interface types. For example, a signal set of three levels can be used with respect to the above-mentioned case of 5 interface types. Further, the setting of the correspondence relation can be implemented by way of setting a correspondence relation table. An implementing example is provided below.

**Table 1**

| C | B | A | Corresponding selected video type | C | B | A | Corresponding selected video type |
|---|---|---|---|---|---|---|---|
| 0 | 0 | 0 | Video | 1 | 0 | 0 | HDMI |
| 0 | 0 | 1 | Super video | 1 | 0 | 1 | Reserved |
| 0 | 1 | 0 | component (YCbCr, YPbPr) | 1 | 1 | 0 | Reserved |
| 0 | 1 | 1 | RGB | 1 | 1 | 1 | No DVD access |

Thus, the operation in step S104 can be described specifically as follows: based on the preset correspondence relation, determining a video interface type corresponding to the obtained state signal; and, based on the determined video interface type, selecting a video channel corresponding to the video interface type.

With the above-mentioned embodiment, selecting a video channel according to a video interface type can be implemented.

According to an embodiment of the present invention, an apparatus for selecting a video channel is further provided. The above-mentioned method for selecting a video channel can be implemented by the apparatus for selecting a video channel.

Fig. 2 is a structural block diagram showing an apparatus for selecting a video channel according to an embodiment of the present invention. As shown in Fig. 2, the apparatus includes an obtaining module 22 and a selecting module 24. Specifically, the obtaining module 22 is used for obtaining a state signal, where the state signal is used for representing a video interface type of an accessed video device; and, the selecting module 24 is used for selecting a video channel according to the state signal obtained by the obtaining module 22.

Preferably, the apparatus for selecting a video channel according to the embodiment of the present invention further includes a setting module (not shown in the figure) for presetting a correspondence relation between the video interface type and the state signal. For example, the correspondence relation can be implemented by setting Table 1. Further, the obtaining module can include a determining module and a controlling module, where the determining module is used for determining the video interface type represented by the obtained state signal based on the correspondence relation preset by the setting module and, the controlling module is used for controlling the selecting module to select the video channel corresponding to the video interface type, based on the video interface type determined by the determining module.

With the above-mentioned embodiment, a video channel can be selected conveniently for a DVD connected to a TV.

According to an embodiment of the present invention, there is provided a video device which can be a VCD, a DVD, a set-top box, etc.

Fig. 3 shows a structural block diagram of the video device. As shown in Fig. 3, the video device includes a signal generating module 32 and an output interface 34, where the signal generating module 32 is used for generating the state signal mentioned above, and the output interface 34 is used for outputting the state signal.

Preferably, the video device according to the embodiment of the present invention further comprises a setting module (not shown in the figure) for presetting a correspondence relation between the video interface type and the state signal. For example, the correspondence relation can be implemented by setting Table 1. Thus, the signal generating module can generate a state signal corresponding to a video interface type of the video device according to the correspondence relation set by the setting module.

In the present embodiment, by taking a DVD as an example, it can be any kind of interface type. The DVD informs a TV, etc. specifically the main control CPU of the TV of what kind interface type it is by presetting the statuses of A, B and C. As illustrated in Table 1, if the video interface type adopted by the DVD is the component (YCbCr, YPbPr) output, then in the circuit of the DVD, A and C are preset as 0 (low level), and B is preset as 1 (high level).

With the above-mentioned embodiment, the DVD can be made to inform the TV of its own video interface type, thus making the TV select a video channel according to the video interface type of the DVD.

According to an embodiment of the present invention, there is provided a TV device.

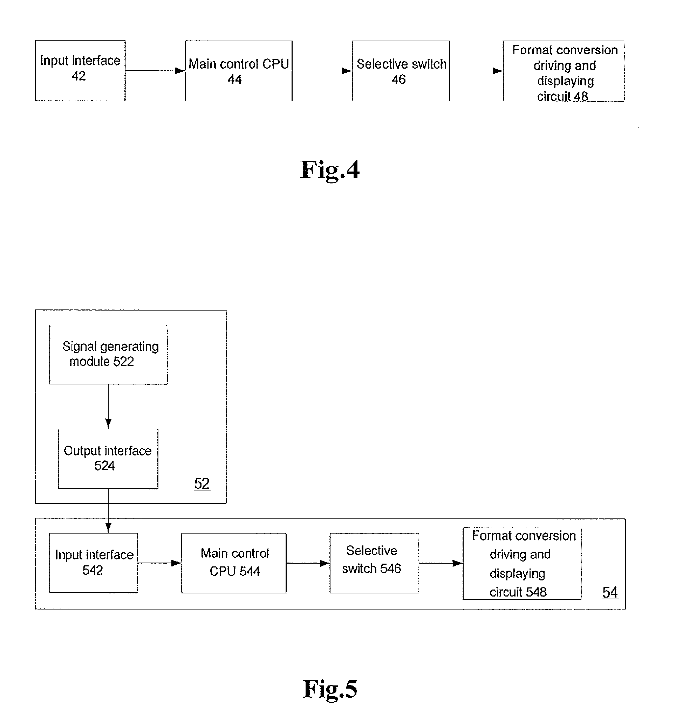

Fig. 4 is a structural block diagram of a TV device according to an embodiment of the present invention. As shown in Fig. 4, the TV device includes an input interface 42, a main control CPU 44 (or called a TV main control CPU), a selective switch 46 (or called a video channel multi-way switch), and a format conversion driving and displaying circuit 48.

The input interface 42 is used for inputting a state signal from the outside (for example, the state signal ABC mentioned above). The main control CPU 44 is used for receiving the state signal, and controlling the selective switch 46 to select a video channel based on the state signal. Correspondingly, the selective switch 46 is used for selecting a video channel accessing the format conversion driving and displaying circuit 48 under the control of the main control CPU 44.

Preferably, the TV device according to the embodiment of the present invention further includes a setting module (not shown in the figure) for presetting a correspondence relation between the video interface type and the state signal. For example, the correspondence relation can be implemented by setting Table 1. Thus, the main control CPU 44 can determine a video interface type corresponding to the received state signal based on the correspondence relation set by the setting module, and control the selective switch 46 to select a video channel corresponding to the video interface type.

In the embodiment, by taking the correspondence relation shown in Table 1 as an example, which video channel is selected specifically to access the format conversion driving and displaying circuit 48 depends on the control for the selective switch 46 by the main control CPU via an IIC, and the main control CPU 44 determines a specific video interface type according to the statuses of A, B and C. For example, if the obtained state signal is 010, then the main control CPU 44 judges the video type of an accessed DVD is a component (YCbCr, YPbPr) type according to the prescription of Table 1, and controls, via the IIC bus, the selective switch 46 to make a video channel corresponding the component (YCbCr, YPbPr) type access the format conversion driving and displaying circuit 48.

In addition, a patch board and a corresponding interface, both of which are replaceable, may be provided at the back of the TV device (TV), in order to replace them with another new one, facilitate product upgrade and lower the complexity and cost of hardware update.

With the above-mentioned embodiment, it is implemented that a TV selects a video channel according to a video interface type.

According to an embodiment of the present invention, there is provided a TV device having a video function, such as an integrated DVD/TV.

Fig. 5 is a structural block diagram of a TV device according to an embodiment of the present invention, which includes a video apparatus 52 and a TV apparatus 54 as shown in the figure. Specifically, the above-mentioned video apparatus further includes a signal generating module 522 for generating a state signal and an output interface 524 for outputting a state signal, and the TV apparatus further includes an input interface 542 for inputting the state signal output from the output interface 524, a main control CPU 544 for receiving the state signal and controlling the selection of a video channel based on the state signal, and, a selective switch 546 for selecting a video channel under the control of the main control CPU.

It can be seen that the input interface 542 is connected with the main control CPU 544 so as to constitute a signal control loop, and the main control CPU 544 is connected with the selective switch 546 so as to constitute a video transmission and selection channel. Specifically, in operation, the output interface of the video apparatus outputs a state signal (a signal set of levels), which is input to the main control CPU via an input interface, and the main control CPU starts and controls the selective switch, thus forming a corresponding video transmission and display channel.

The video apparatus and TV apparatus of the present embodiment can be understood, respectively, with reference to the video device and TV device mentioned above, and the identical or similar contents will not be described repetitively any longer herein.

It should be pointed out that the TV device can also include a setting module for presetting a correspondence relation between a video interface type and a state signal. The setting module can be independent of the video apparatus and the TV apparatus, and can also be built in the video apparatus or the TV apparatus, but the setting module need to notify the video apparatus and the TV apparatus of the set correspondence relation.

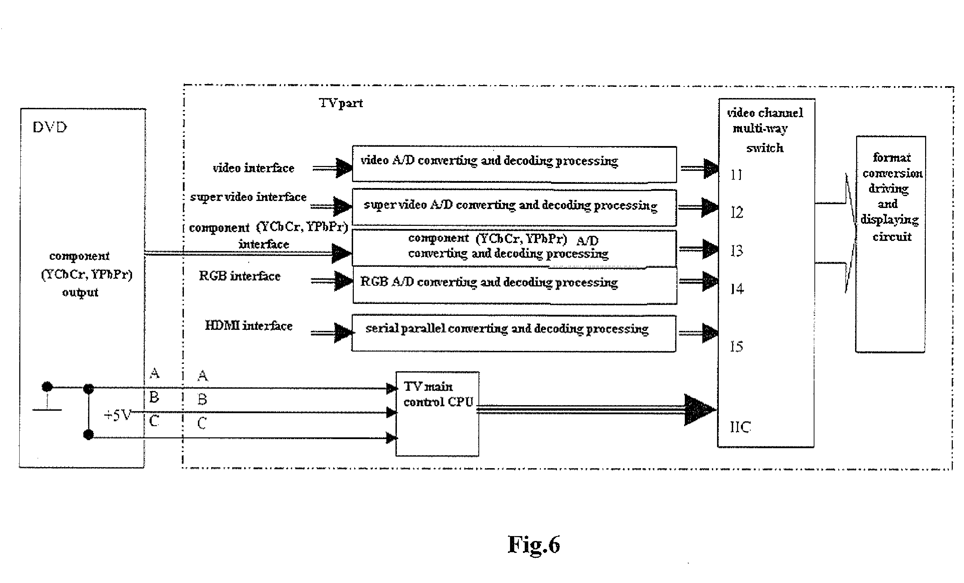

Fig. 6 shows a logical structural schematic diagram of a TV device having a video function according to an embodiment of the present invention, and also shows a schematic diagram of the connecting process between the video device of Fig. 4 and the TV device of Fig. 5. As shown in Fig. 6, the video type adopted by the DVD is a component (YCbCr, YPbPr) output, therefore, according Table 1, its own video interface type can be represented by presetting the statuses of A, B and C as 0, 1 and 0. After the presetting, the DVD accesses the TV, and the main control CPU of the TV controls, via an IIC bus, the selective switch to make the 13 access the format conversion driving and displaying circuit.

Further, if it needs to upgrade the DVD and the output video type of the DVD is upgraded to an HDMI type, then A, B of the DVD are preset as 0 and C of the DVD is preset as 1. The DVD accesses directly the TV after the completion of the presetting. The main control CPU of the TV judges, according to he prescription of Table 1, the video type of the accessed DVD is the HDMI type. Then the main control CPU of the TV controls, via the IIC bus, the selective switch to make the 16 access the format conversion driving and displaying circuit. Thus the upgrade of the DVD can be completed without changing the hardware/software system of the TV.

In addition, the presetting of the video interface type of the DVD can also implement the identification of the video interface type of the DVD by using the main control CPU of the DVD and the main control CPU of the TV via an IIC interface or a universal serial interface directly.

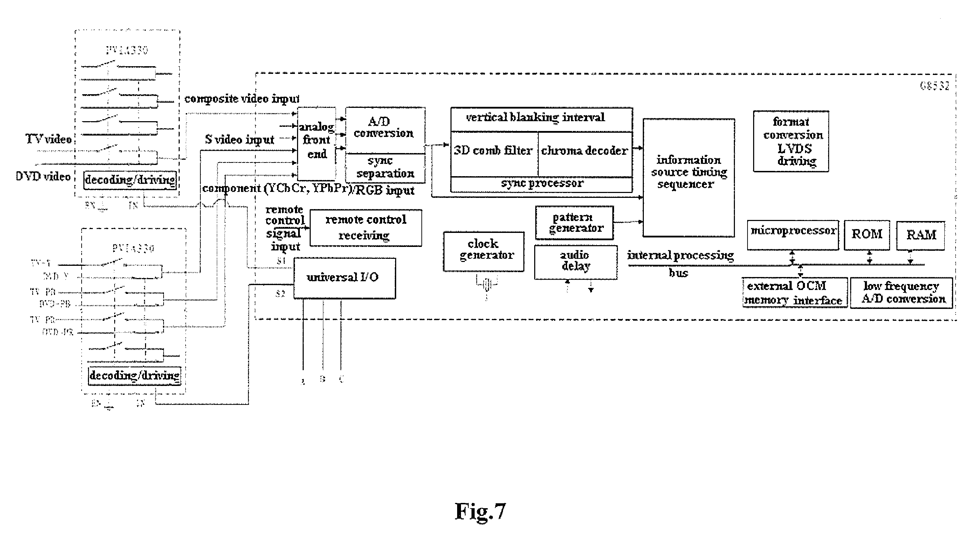

The present invention can be better understood through the example provided below. Fig. 7 is a schematic diagram of a logical structure according to an application example of the present invention.

As shown in Fig. 7, in the example, 8532 main chip (G8532) of the company of GENESIS is used as the main processing chip of a TV, the periphery uses a broadband multi-way switch PVIA330, the video of the TV and the video of the DVD access the 8532 via the PVIA330, and meantime, the component (YCbCr, YPbPr) signal of the TV and the component (YCbCr, YPbPr) signal of the DVD access the 8532 via another PVIA330. A MPU (microprocessor) of the 8532 implement the control for two multi-way switches via GPIO'S (universal I/O) and GPIO'S accesses state signal A, B and C. The whole operation process is as follows:

### (1) Video signal access

When the MPU of the 8532 finds there is a zero signal among the state signal A, B and C via GPIO'S, it indicates there is a DVD accessing the system. When A=0, B=0 and C=0, according to the agreement of Table 1, the MPU of the 8532 determines the access at this time is a video input, and the MPU sets S1 as 1 via GPIO'S at this time, and meantime makes a video channel access ADC'S via an internal ANALOG FRONT END. After the completion of A/D conversion, it proceeds to the subsequent processing after decoding in Video Decoder until the completion of image format conversion and display.

### (2) component (YCbCr, YPbPr) signal access

When the MPU of the 8532 finds there is a zero signal among the state signal A, B and C via GPIO'S, it indicates there is a DVD accessing the system. When A=0, B=1 and C=0, according to the agreement of Table 1, the MPU of the 8532 determines the access at this time is a component (YCbCr, YPbPr) input, and the MPU sets S2 as 1 via GPIO'S at this time, and meantime makes a component (YCbCr, YPbPr) channel access ADC'S via an internal ANALOG FRONT END. After the completion of A/D conversion, it proceeds directly to the subsequent processing until the completion of image format conversion and display.

It can be seen from the above mentioned application example that, through the state signal ABC and the predetermined correspondence relation, it can be implemented that the type of the accessed DVD video is identified automatically and channels are automatically converted, and the upgrade of the DVD can also be implemented without changing any hardware/software.

What is described above is only the preferred embodiments of the present invention, and is not used to limit the present invention. For those skilled in the art, various changes and variations can be made to present invention. All modifications, equivalent substitutions, improvements and etc. made within the spirit and principle of the present invention are covered by the protection scope of the present invention.

## Claims

1. A method for selecting a video channel, comprising steps of:
obtaining a state signal, wherein the state signal is used for representing a video interface type of an accessed video device; and,
selecting a video channel according to the state signal.

2. The method according to claim 1, wherein the method further comprises a step of:
before obtaining the state signal, presetting a correspondence relation between the video interface type and the state signal.

3. The method according to claim 2, wherein the step of selecting a video channel according to the state signal further comprises steps of:
determining the video interface type corresponding to the obtained state signal based on the preset correspondence relation; and,
selecting the video channel corresponding to the video interface type according to the determined video interface type,.

4. The method according to any of claim 1 to claim 3, wherein the state signal is a signal set of three levels.

5. The method according to claim 4, wherein when there is no access of a video device, all the three levels are high level.

6. An apparatus for selecting a video channel, comprising:
an obtaining module for obtaining a state signal, wherein the state signal is used for representing a video interface type of an accessed video device; and,
a selecting module for selecting a video channel according to the state signal obtained by the obtaining module.

7. The apparatus according to claim 6, wherein the apparatus further comprises:
a setting module for presetting a correspondence relation between the video interface type and the state signal.

8. The apparatus according to claim 7, wherein the obtaining module further comprises:
a determining module for determining the video interface type represented by the received state signal based on the correspondence relation preset by the setting module; and,
a controlling module for controlling the selecting module to select the video channel corresponding to the video interface type, based on the video interface type determined by the determining module.

9. A video device, comprising:
a signal generating module for generating a state signal, wherein the state signal is used for representing a video interface type of the video device; and,
an output interface for outputting the state signal.

10. The video device according to claim 9, wherein the video device further comprises:
a setting module for presetting a correspondence relation between the video interface type and the state signal,
wherein the signal generating module is used for generating the state signal corresponding to the video interface type of the video device based on the correspondence relation set by the setting module.

11. A TV device comprising:
an input interface for inputting a state signal, wherein the state signal is used for representing a video interface type of a video device accessing the TV device;
a main control CPU for receiving the state signal and controlling video channel selection based on the state signal;
a selective switch for selecting a video channel under control of the main control CPU; and
a format conversion driving and displaying circuit for accessing the video channel selected by the selective switch.

12. The TV device according to claim 11, wherein the TV device further comprises:
a setting module for presetting a correspondence relation between the video interface type and the state signal,
wherein the main control CPU is used for determining the video interface type corresponding to the received state signal based on the correspondence relation set by the setting module, and controlling the selective switch to select a video channel corresponding to the video interface type.

13. A TV device with a video function comprising a video apparatus and a TV apparatus, **characterized in that**:
the video apparatus comprises:
a signal generating module for generating a state signal, wherein the state signal is used for representing a video interface type of the video apparatus; and,
an output interface for outputting the state signal, and
the TV apparatus comprises:
an input interface for inputting the state signal;
a main control CPU for receiving the state signal and controlling video channel selection based on the state signal; and
a selective switch for selecting a video channel under control of the main control CPU.

14. The TV device according to claim 13, wherein the TV device further comprises:
a setting module for presetting a correspondence relation between the video interface type and the state signal and notifying the video apparatus and the TV apparatus of the set correspondence relation.

15. The TV device according to claim 14, **characterized in that**
the signal generating module is used for generating the state signal corresponding to the video interface type of the video apparatus based on the correspondence relation set by the setting module; and
the main control CPU is used for determining the video interface type corresponding to the received state signal based on the correspondence relation set by the setting module, and controlling the selective switch to select a video channel corresponding to the video interface type.

16. The TV device according to claim 13, wherein the TV apparatus further comprises:
a format conversion driving and displaying circuit for accessing the video channel selected by the selective switch.

17. The TV device according to any of claim 13 to claim 16, wherein the state signal is a signal set of three levels.
